# EUROPEAN PATENT APPLICATION

(11) **EP 1 783 698 A2**
(43) Date of publication of application: **09.05.2007**
(21) Application number: 06020568.9
(22) Date of filing: 29.09.2006
(51) Int. Cl.: G07D 7/00, G07D 11/00

(54) **Paper handling system and paper handling method**

(30) Priority: 07.10.2005 JP 2005294378
(71) Applicant: Hitachi-Omron Terminal Solutions, Corp., Shinagawa-ku Tokyo 141-0032 (JP)
(72) Inventor: Kato, Atsuhi Hitachi, Ltd., Chiyoda-ku Tokyo 100-8220 (JP); Mizuno, Eiji Hitachi, Ltd., Chiyoda-ku Tokyo 100-8220 (JP); Mori, Akira Hitachi, Ltd., Chiyoda-ku Tokyo 100-8220 (JP); Nomura, Takahiro Hitachi, Ltd., Chiyoda-ku Tokyo 100-8220 (JP)
(74) Representative: Strehl Schübel-Hopf & Partner

(57) **Abstract**

An operation command file 210 storing operation commands is established on a memory card 200. When the memory card 200 is connected to a memory card connector 60, the CPU 40 of a bill recognition unit 100 executes the operation commands stored in the operation command file 210, and saves a data file to a data file memory unit.

## Description

### Incorporation by reference

The present application claims the priority based on Japanese Patent Application No. 2005-294378 filed on October 7, 2005, the disclosure of which is hereby incorporated by reference in its entirety.

### Background of the Invention

### Technical Field

The present invention relates to execution of operation commands in a paper handling apparatus that handles paper instruments such as bills and securities.

### Description of the Related Art

Automated Teller Machine (hereinafter "ATM") typically has a bill recognition unit which uses a sensor to recognize certain characteristics of paper bill being deposited, in order to acquire bill characteristic data indicating the characteristics of a bill, and detects the deposited currency on the basis of the bill characteristic data. Besides this bill characteristic data, the bill recognition unit also stores data of various kinds for the purpose of maintenance and inspection of the bill recognition unit. Since sending this data over a network may represent a security problem, where maintenance was to be performed on the bill recognition unit by an ATM maintenance operator, an individual with exclusive privileges to administer secret information in the bill recognition unit would bring a maintenance computer to the actual site, connect the computer to the ATM, and perform the tasks of configuring the operating environment and transferring data to the computer. Depending on the locale, there may be significant variability in bill characteristic data due to bills in circulation becoming soiled or to variability in printing; however, the paper currency that can be procured by way of samples is only a tiny fraction thereof. The challenge for the designer of the bill recognition unit is to design a bill detection algorithm based on characteristic data from a limited number of sample bills. Technology for doing so is disclosed in JP2000-298771A, JP2002-150362A, JP2004-94624A, and JP6-150114A.

### Summary of the Invention

Bringing a maintenance computer to each of the ATMs interspersed at various locales, connecting the computer to the ATM, and configuring the operating environment to perform maintenance operations requires considerable labor by maintenance operators. In some instances, in the course of these operations it is necessary for maintenance operators to make the ATM execute operation commands of various kinds, requiring a high degree of technical skill of maintenance operators. Additionally, since maintenance of the bill recognition unit is confidential, it is necessary to simplify maintenance operations under conditions providing security to maintenance operators. Further, collecting more data regarding variability in bill characteristics in order to improve the reliability of bill detection requires that efforts be made to acquire bills in various conditions, in circulation over a wide locale.

Such problems are not limited to ATMs, but are common in general to maintenance operations for paper handling apparatuses that handle paper documents such as paper currency or securities. Also, data acquired by maintenance operators from paper handling apparatuses is not limited to data for the purpose of maintenance operations, and in some instances there is acquired data that cannot be stored in memory within a paper handling apparatus due to limited memory capacity.

The present invention is directed to addressing the problems discussed above, and has as an object to provide technology that reduces the burden of tasks for maintenance operators and designers, and that enables data to be acquired easily from paper handling apparatuses.

To address the aforementioned problems at least in part, the paper handling system according to an aspect of the present invention provides a paper handling system comprising a paper handling apparatus that handles paper instruments. The paper handling apparatus comprises a control unit configured to control a portable memory medium which is to be detachably attached to the paper handling apparatus; the portable memory medium stores one or more operation commands. The control unit comprises: a detection unit configured to detect whether the portable memory medium is currently in an attached state to the paper handling apparatus; an operation command execution module configured to execute, if the detection unit detects the attached state, the one or more operation commands and to output execution result data obtained by executing the one or more operation commands; and a recording unit configured to store the execution result data onto the portable memory medium.

According to this system, execution result data can be acquired easily from the paper handling apparatus by attaching the portable memory medium to the control unit.

The execution result data may be utilized for the purpose of maintenance of the paper handling apparatus or for the purpose of examining paper instruments in circulation in the service region of the paper handling apparatus.

At least one operation command of the or more operation commands may be one that instructs modification on a trial basis of the operating characteristics of the paper handling apparatus, and the execution result data may be utilized for validation regarding modification of the operating characteristics.

By so doing, data that can utilized for the purpose of validation regarding modification of operating characteristics can be acquired by attaching the portable memory medium to the control unit.

The paper handling apparatus may further comprise a sensor for recognizing a characteristic of a the paper instrument; the execution result data may be data representing output of the sensor. The paper handling system may further comprise a memory unit that stores in memory sensor status indicating the severity of impairment of the sensor, in a form associated with the execution result data; and sensor status display module that acquires from the memory unit the sensor status that has been stored in association with the execution result data in the portable memory medium, and displays the sensor status.

By means of this arrangement, since sensor status is displayed, the user can be apprised of the severity of impairment of the sensor.

The paper handling apparatus may further comprise a sensor for recognizing a characteristic of the paper instrument and outputting characteristic data based on the characteristic; and an identifying data generation module for generating on the basis of the characteristic data identifying data for the purpose of identifying at least one aspect selected from the type, authenticity, and possibility of recycling the paper instrument; wherein the sensor is capable of output of sensor data representing output of the sensor in a prescribed standard status; and the execution result data includes at least one set of data selected from the characteristic data, the identifying data, and the sensor data.

The present invention may take the form of any of various other embodiments, for example, a paper handling method, a paper handling apparatus, a computer program for realizing the functions thereof, a recording medium having such a program recorded thereon, and the like.

### Brief Description of the Drawings

FIG. 1 is an illustration of a paper handling system 10000 for handling paper instruments including bills and securities;
FIG. 2 is an illustration depicting in detail a CPU 40, an SDRAM 50, and a sensor unit 70;
FIG. 3 is an illustration depicting bill characteristic data Dt equivalent to a single bill;
FIG. 4 is an illustration depicting sensor data Sd equivalent to a single scan by the sensor unit 70;
FIG. 5 is an illustration depicting identifying data Jud;
FIG. 6 is an illustration depicting types of status of an LED 80;
FIG. 7 is an illustration depicting type and content of operation commands;
FIG. 8 is an illustration depicting a suffix code management file 220;
FIGs. 9A and 9B illustrate examples of an operation command file 210;
FIG. 10 is an illustration depicting fluctuations in gain of the sensor unit 70 when the CPU 40 executes the operation command files Aaa.cmd211 and Bbb.cmd212 in that order;
FIG. 11 is a flowchart depicting a maintenance operation execution sequence;
FIG. 12 is a flowchart depicting an operation command execution process;
FIG. 13 is an illustration depicting an identifying data assessment criteria table 311;
FIG. 14 is an illustration depicting a sensor data assessment criteria table 312; and
FIG. 15 is a flowchart depicting the sensor status decision process of a sensor status assessment module 320.

### Detailed Description of the Invention

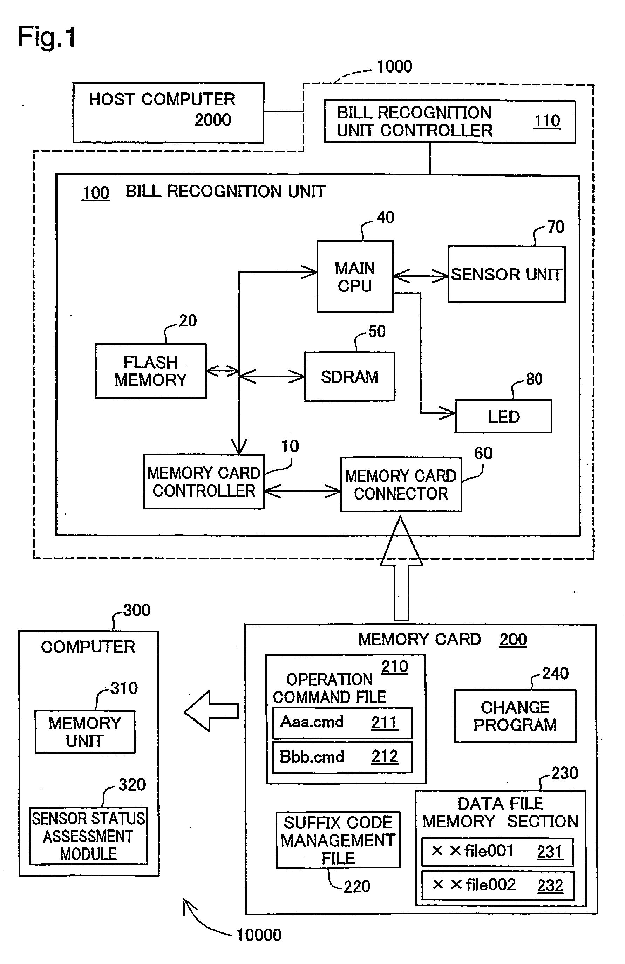

FIG. 1 is an illustration of a paper handling system 10000 for handling paper instruments including bills and securities. This paper handling system 10000 is a system that enables a maintenance operator to easily perform maintenance operations on a bill recognition unit 100, using a memory card 200. In the present embodiment, the description assumes that the paper instruments are bills.

The paper handling system 10000 is equipped with an ATM (Automated Teller Machine) 100 capable of automated transactions; a memory card 200; and a computer 300 for maintenance purposes. The ATM 1000 is connected to a host computer 2000; it communicates with the host computer 2000, and accepts bills from users for financial transaction purposes. The ATM 1000 is equipped with a bill recognition unit 100. This bill recognition unit 100 corresponds to the paper handling apparatus and control unit of the present invention.

The bill recognition unit 100 detects bills infed to the ATM 1000 by users. The bill recognition unit 100 has a function of executing operation commands stored in the memory card 200. These operation commands will be described in detail later. The bill recognition unit 100 comprises a memory card controller 10, a flash memory 20, a CPU 40, an SDRAM 50, a memory card connector 60, a sensor unit 70, and an LED (Light Emitting Diode) 80. The CPU 40 corresponds to the operation command execution module and the recording module of the present invention. The flash memory 20 stores various computer programs for operating the bill recognition unit 100.

The memory card 200 is to be attached to the memory card connector 60. The memory card controller 10 detects when the memory card 200 has been attached to the memory card connector 60, and the CPU 40 reads the operation command file 210 from the memory card 200 attached to the memory card connector 60, whereupon data files 231, 232 are saved to a data file memory section 230 of the memory card 200. The operation command file 210 and the data files 231, 232 will be described in detail later. The memory card controller 10 is a circuit that sets up an environment in which the CPU 40 can read data from the memory card 200 and write data to the memory card 200, and that also executes data encoding, decoding, and other such data conversion processes; it corresponds to the detection unit of the present invention.

The memory card controller 10 converts the data format of operation command file 210 of the memory card 200 so that it can be interpreted by the CPU 40. In the event that the operation command file 210 saved on the memory card 200 has been encoded, the file will be decoded before being output to the CPU 40. The memory card controller 10 also executes a process to convert the data files 231, 232 output by the CPU 40 to the data format for storage on the memory card 200. In the event that the CPU 40 has output the data files 231, 232 with a data file encoding request appended thereto, the memory card controller 10 will encode the data files before outputting them of the memory card connector 60. While the description here assumes that coding/decoding is performed by the memory card controller 10, these processes could instead be performed by the CPU 40.

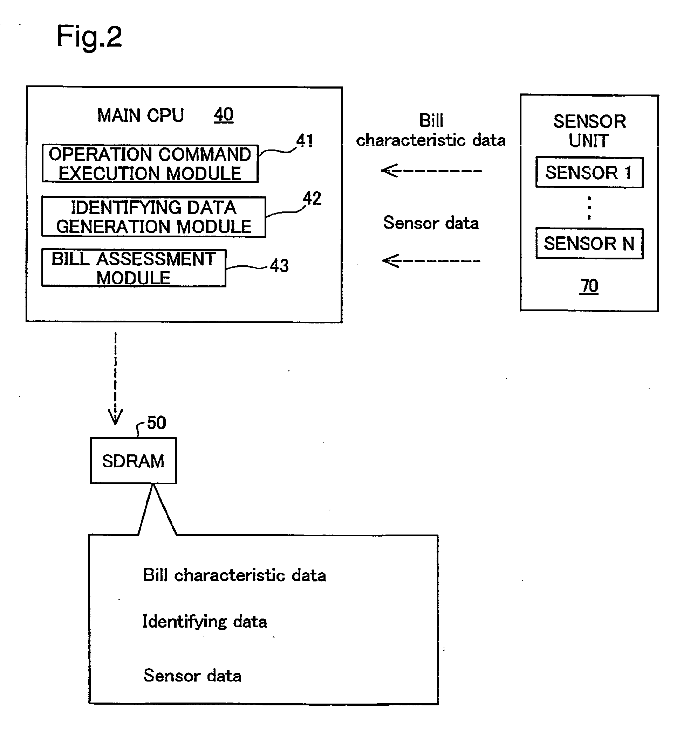

FIG. 2 is an illustration depicting in detail the CPU 40, SDRAM 50, and sensor unit 70. The sensor unit 70 is equipped with a plurality of sensors 1 to n. The sensor unit 70 recognizes certain characteristics of a bill infed to the ATM 1000 by a user and transported along a transport path (not shown). The characteristics of a bill refer, for example, to the profile (outer shape), design, or thickness of the bill, or to a magnetic pattern. The sensor unit 70 outputs the recognized characteristics to the CPU 40, as bill characteristic data.

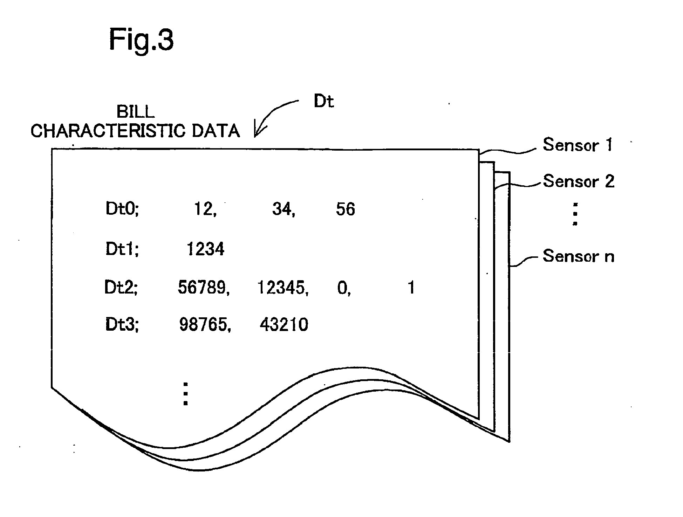

FIG. 3 is an illustration depicting bill characteristic data Dt equivalent to a single bill. The bill characteristic data Dt represent bill characteristics recognized and output by the sensors 1 to n. Each item of bill characteristic data Dt0 -Dt3 recognized by the sensor 1 gives data values derived by recognizing a different characteristic. Each of the sensors 1 to n has multiple channels (e.g. the three channels R, G, B), and outputs the items of data over the multiple channels. In the case of the sensor 1 for example, since different numbers of channels for output of data are pre-selected for each item of bill characteristic data Dt0 -Dt3, the number of items of data differs among the bill characteristic data Dt0 -Dt3.

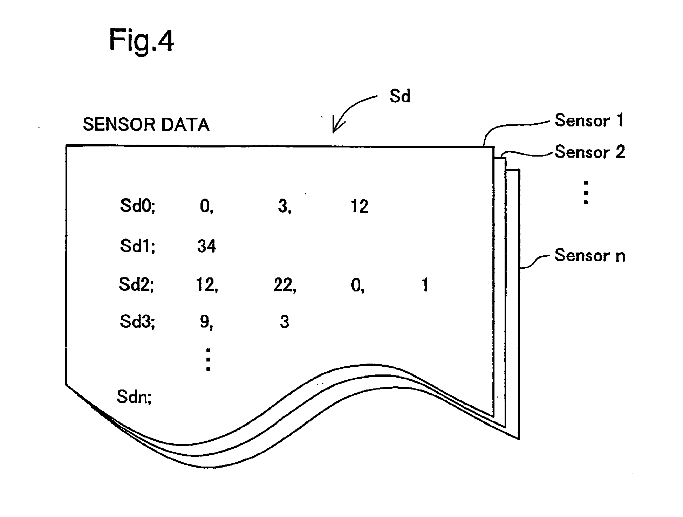

The sensor unit 70 of FIG. 2, during times that no bill is being transported over the transport path, periodically executes scanning and outputs sensor data. This sensor data indicates a standard output representing the output of the sensor unit 70 in a prescribed standard state. FIG. 4 is an illustration depicting sensor data Sd equivalent to a single scan by the sensor unit 70. The configuration of this sensor data Sd is the same as the configuration of the bill characteristic data Dt. The sensor data Sd indicating the standard output of the sensor unit 70 may instead be data for a sample paper instrument recognized and output by the sensor unit 70.

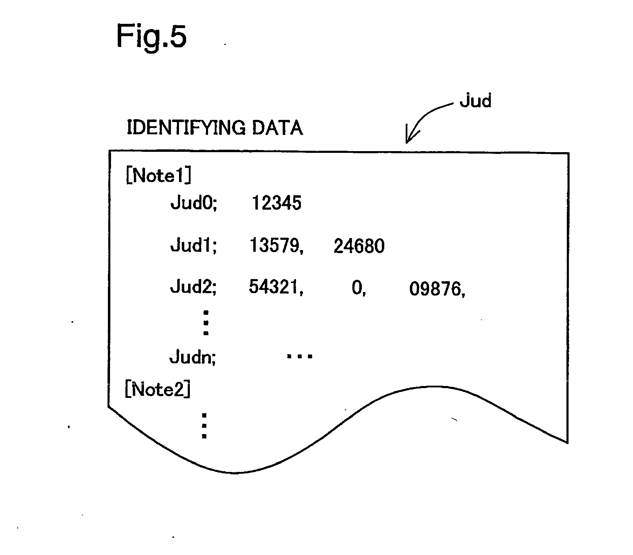

The CPU 40 of FIG. 2 functions as an operation command execution module 41, an identifying data generation module 42, and a bill assessment module 43. The operation command execution module 41 receives the operation command file 210 from the memory card controller 10, and then executes the operation command described in the operation command file 210. Operation commands will be described in detail later. The identifying data generation module 42 generates identifying data by means of performing computations of the bill characteristic data Dt with a prescribed plurality of computing equations. The identifying data is data for the purpose of identifying the type, authenticity, and possibility of recycling a bill. FIG. 5 is an illustration depicting identifying data Jud. The identifying data Jud includes data Jud0 -Judn, and is generated for each individual bill.

The bill assessment module 43 of FIG. 2 decides the type, authenticity, and possibility of recycling a bill, on the basis of the identifying data Jud. The CPU 40 saves the bill characteristic data Dt, the identifying data Jud, and the sensor data Sd in the SDRAM 50. In the SDRAM 50 are saved bill characteristic data Dt, identifying data Jud, and sensor data Sd acquired since startup of the bill recognition unit 100. However, the data is not limited to this, and it would be acceptable for the SDRAM 50 to instead save bill characteristic data Dt and identifying data Jud relating to the most recent bill only; or to save bill characteristic data Dt and identifying data Jud equivalent to the most recent transaction. It is also acceptable for the SDRAM 50 to save sensor data Sd equivalent to only the most recent single scan by the sensor unit 70.

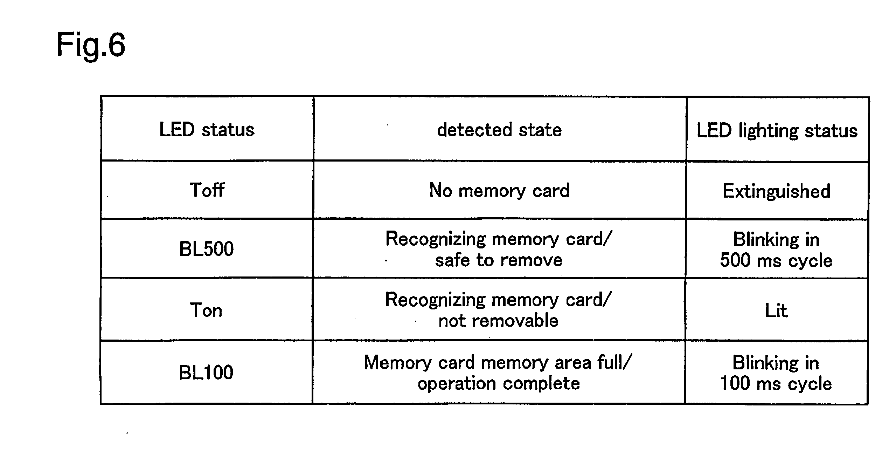

The LED 80 of FIG. 1 indicates to the user whether the memory card 200 can be removed from the bill recognition unit 100. FIG. 6 is an illustration depicting types of status of the LED 80. The status of the LED 80 will hereinafter be referred to simply as LED status. The LED status are Toff, BL500, Ton, and BL100. LED status changes depending on the detected state of the memory card 200 by the CPU 40. The detected states are "no memory card," "recognizing memory card/safe to remove," "recognizing memory card/not removable," and "memory card memory area full/operation complete."

In the "no memory card" detected state in which the memory card 200 is not connected to the memory card connector 60, the CPU 40 extinguishes the LED 80. This LED status is termed Toff. In the state of "recognizing memory card/safe to remove," in which the memory card 200 is connected to the memory card connector 60, but the memory card 200 is not being accessed by the bill recognition unit 100 so that is it possible for the memory card 200 to be removed safely, the CPU causes the LED 80 to blink in a 500 ms cycle. This LED status is termed BL500. In the state of "recognizing memory card/not removable," in which the memory card 200 is connected to the memory card connector 60 and the memory card 200 is currently being accessed by the bill recognition unit 100 so that the memory card 200 cannot be removed, the CPU causes the LED 80 to light up. This LED status is termed Ton. In the state of "memory card memory area full/operation complete" in which the memory area of the memory card 200 is full or the CPU 40 has completed execution of the operation commands of the operation command file 210, the CPU causes the LED 80 to blink in a 100 ms cycle. This LED status is termed BL100.

The memory card 200 stores the operation command file 210, the suffix code management file 220, and a change program 240; the data file memory section 230 is provided separately from these. The operation command file 210 stores operation commands.

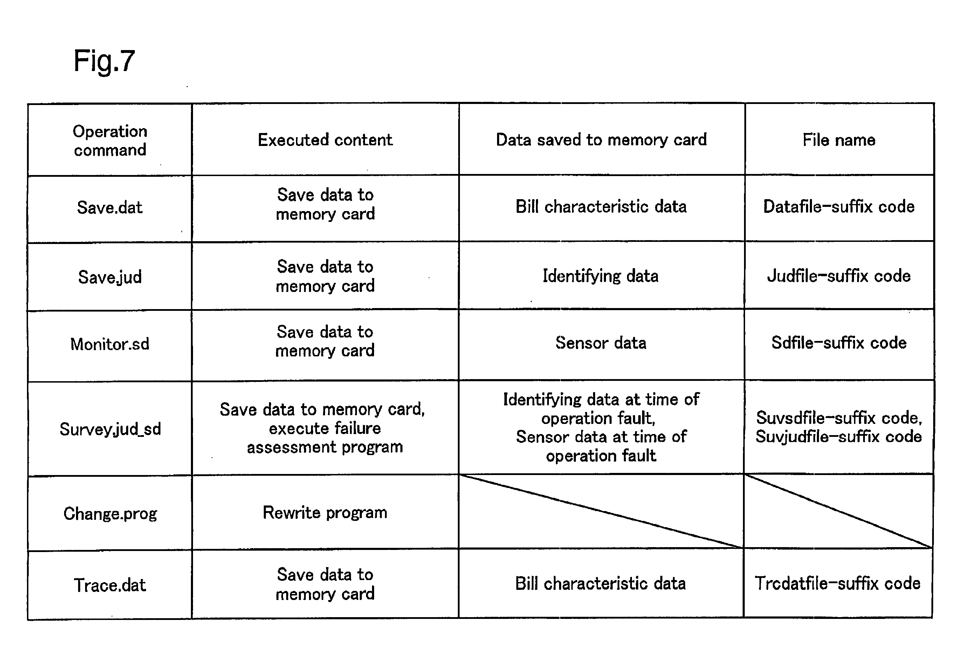

FIG. 7 is an illustration depicting type and content of operation commands. These operation commands are: a bill characteristic data save command Save.dat; an identifying data save command Save.jud; a sensor data save command Monitor.sd; a command for execution in operating fault mode Survey.jud_sd; a command for execution in non-recyclable bill detected mode Trace.dat; and a change program execution command Change.prog.

In the event that the operation command is the bill characteristic data save command Save.dat, the CPU 40 acquires the bill characteristic data Dt currently saved in the SDRAM 50, and now saves this data, in the form of a data file 231, in the data file memory section 230 of the memory card 200. The file name under which the bill characteristic data Dt will be saved is specified by an argument of the bill characteristic data save command Save.dat. Here, let the file name of the data file be Datafile-xxx. Here, "xxx" is a suffix code for the purpose of identifying the file. A data file is created for each set of bill characteristic data Dt equivalent to a single bill currently saved in the SDRAM 50, and suffix codes from 000 to 999 are assigned to these sequentially starting from 000.

For example, the data file initially saved to the data file memory section 230 after initiating execution of the bill characteristic data save command Save.dat will be assigned the file name Datafile-000. Besides the file name, an argument of the bill characteristic data save command Save.dat can specify a file number of data files to be saved. For example, if the argument is 20, the CPU 40 will save 20 files. Also, if the argument is "all", the CPU 40 will take the bill characteristic data Dt equivalent to a single bill saved in the SDRAM 50 just prior to the memory card 200 being connected to the memory card connector 60, and all of the bill characteristic data Dt most recently placed in the SDRAM 50 during the time that the memory card 200 has been connected to the memory card connector 60, and save these data in data files in the data file memory section 230. Here, where the argument is "all", the CPU 40 takes bill characteristic data Dt equivalent to a single bill saved in the SDRAM 50 just prior to the memory card 200 being connected to the memory card connector 60. and saves this data in a data file; however, it would be acceptable for all bill characteristic data Dt stored in the SDRAM 50 at the point in time that the memory card 200 was connected to be saved to data files. Here, it is assumed that a data file is generated for each single bill, but is not limited thereto; data files may be generated on a per-transaction basis instead.

In the event that the operation command is the identifying data save command Save.jud, the CPU 40 acquires the identifying data Jud currently saved in the SDRAM 50, and now saves it to a data file in the data file memory section 230 of the memory card 200. A file is created for each set of identifying data Jud equivalent to a single bill currently saved in the SDRAM 50. The file name during saving of identifying data Jud is Judfile-xxx. The manner of appending suffix codes to data files and the manner of establishing arguments of the identifying data save command Save.jud are the same as for the bill characteristic data save command Save.dat.

In the event that the operation command is the sensor data save command Monitor.sd, the CPU 40 acquires the sensor data Sd currently saved in the SDRAM 50 and now saves it to a data file in the data file memory section 230 of the memory card 200. A file is created for each set of sensor data Sd equivalent to one scan by the sensor unit 70 currently saved in the SDRAM 50. The file name during saving of sensor data Sd is Sdfile-xxx. The manner of appending suffix codes xxx to data files and the manner of establishing arguments of the sensor data save command Monitor.sd are the same as for the bill characteristic data save command Save.dat. Sensor data Sd is generated at periodic intervals, and when sensor data Sd has been generated, the CPU 40 saves the data in a data file on the memory card 200.

In the event that the operation command is the command for execution in operating fault mode Survey .jud_sd, the CPU 40 acquires the identifying data Jud and the sensor data Sd that were saved in the SDRAM 50 at the time that the bill recognition unit 100 encountered the operating fault, and saves these data to the data file memory section 230 of the memory card 200 under the respective file names Suvjudfile-xxx and Suvsdfile.xxx. That is, the CPU 40, when triggered by the occurrence of an operating fault in the bill recognition unit 100, performs a save of the identifying data Jud and the sensor data Sd. An operating fault refers to an instance where, for example, in the course of a single transaction, a succession of bills are determined to be non-recyclable or counterfeit. The manner of appending suffix codes xxx to files is the same as for the bill characteristic data save command Save.dat. It is also acceptable for the decision as to whether or not an operating fault has occurred during a maintenance operation to be made by maintenance operators. In this case, when an operating fault has occurred, the maintenance operator connects the memory card 200 to which the command for execution in operating fault mode Survey jud_sd has been saved to the memory card connector 60. By so doing, the CPU 40 will execute the command for execution in operating fault mode Survey.jud_sd. That is, the identifying data Jud and sensor data will be saved to data files in the memory card 200. In some instances, at least some of the bill characteristic data Dt can be saved.

In the event that the operation command is the command for execution in non-recyclable bill detected mode Trace.dat, the CPU 40 takes the bill characteristic data Dt relating to the bill determined to be non-recyclable that was saved to the SDRAM 50 when the bill assessment module 43 decided that the bill was non-recyclable, and saves this data to the data file memory section 230 of the memory card 200 under the file name Trcdatfile-xxx. That is, the CPU 40, when triggered by a decision by the bill assessment module 43 that a bill is non-recyclable, performs a save of the bill characteristic data Dt. The manner of appending suffix codes xxx to files is the same as for the bill characteristic data save command Save.dat.

Here, the CPU 40 executes the command for execution in non-recyclable bill detected mode Trace.dat when the bill assessment module 43 decides that a bill is non-recyclable, but the CPU 40 may also execute the command for execution in non-recyclable bill detected mode Trace.dat when the bill assessment module 43 decides that a bill is a counterfeit bill.

In the event that the operation command is the change program execution command Change.prog, the CPU 40 executes the change program 240 stored in the memory card 200. The change program 240 is a program for varying the input/output characteristics (gain) of the sensor unit 70 by a rate of change specified by an argument. If no argument is specified, gain is varied by a prescribed value.

The content of the change program execution command Change.prog is not limited to this; it would also be acceptable for the CPU 40, in the event that the operation command is the change program execution command Change.prog, to change the control program of the sensor unit 70 to the change program 240. A characteristic or program to be changed by the change program execution command Change.prog is specifiable by the argument of the change program execution command Change.prog.

In addition to those mentioned above, arguments that specify encoding of various kinds of data files can be appended to the arguments of operation commands. In the event that such an argument is specified, the CPU 40 will append a data file encoding request and output a data file, and the memory card controller 10 will perform encoding of the data file and save the encoded data file to the memory card 200.

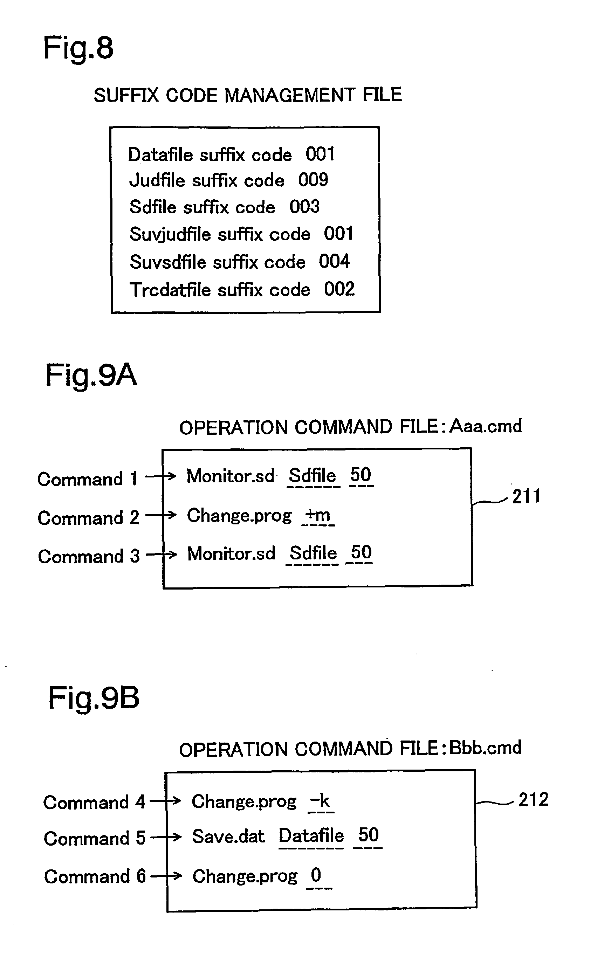

FIG. 8 is an illustration depicting a suffix code management file 220. The suffix code management file 220 manages suffix codes appended to the various data files Datafile, Judfile, Sdfile, Suvjudfile, Suvsdfile, and Trcdatfile. The CPU 40, when creating a new file, appends to the file name a suffix code stored in the suffix code management file 220, and increments by 1 the suffix code in the suffix code management file 220. For example, with the suffix code management file 220 in the condition depicted in FIG. 8, in the event that a new Datafile is created, the file name Datafile-001 will be assigned, and the Datafile suffix code in the suffix code management file 220 will reset to 002.

FIGs. 9A and 9B illustrate the content of the operation command file 210. FIG. 9A shows the operation command file Aaa.cmd 211 of FIG. 1; FIG. 9B shows the operation command file Bbb.cmd 212 of FIG. 1. The operation command file Aaa.cmd 211 includes three commands to be executed in sequence, which instruct that sensor data Sd be saved to the memory card 200 (Command 1); next that the gain of the sensor unit 70 be changed (Command 2); and then that sensor data Sd be saved to the memory card 200 (Command 3). The portions underlined with broken lines are arguments; in the sensor data save command Monitor.sd, the first argument specifies a file name for the data file, while the second specifies the number of data files to be created. The argument of the change program execution command Change.prog specifies a rate of change for gain. The symbol m in the drawing represents a positive integer.

The sensor data Sd obtained as a result of execution of the operation command file Aaa.cmd 211 affords simulated realization, by means of the change program execution command Change.prog, of deterioration over time or environmental changes of the sensor unit 70; comparison of sensor data Sd obtained by execution of Command 1 with sensor data Sd obtained by execution of Command 3 affords data for the purpose of examining correction of the input/output characteristics of the sensor unit 70 during deterioration over time or environmental changes using bills in circulation in the service area. Where the change program execution command Change.prog changes the control program of the sensor unit 70 to the change program 240, the sensor data Sd obtained by execution of Command 1 and Command 3 may serve as data for the purpose of examining change in control specifications.

The operation command file Bbb.cmd 212 instructs that the gain of the sensor unit 70 be changed (Command 4); that bill characteristic data Dt be saved to the memory card (Command 5); and that the gain of the sensor unit 70 be changed again (Command 6). An argument of the change program execution command Change.prog specifies the rate of change of gain. Symbol k in the drawing is a positive constant. The first argument of the bill characteristic data save command Save.dat specifies a file name for the data files; the second argument specifies the number of data files to be created. The bill characteristic data Dt obtained as the result of execution of the operation command file Bbb.cmd 212 may serve as data for the purpose of examining the limits of bill detection capability due to degraded sensor output using bills in circulation in the service area, for example.

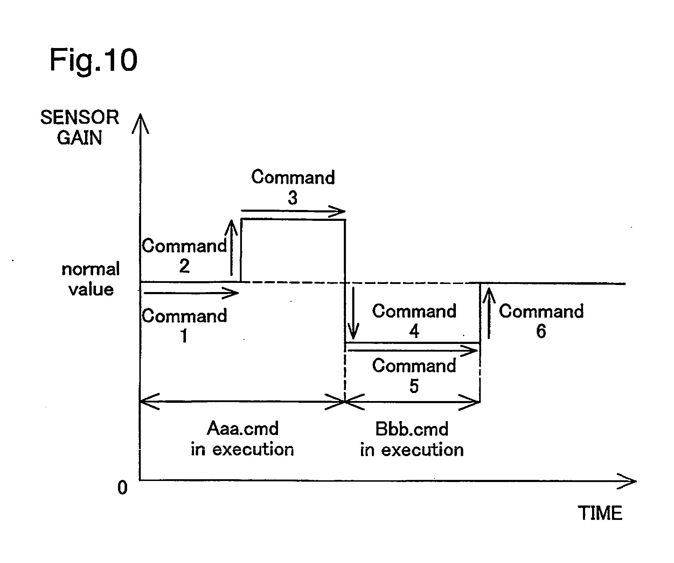

In the event that there are multiple operation command files 210, these will be executed in sequence. For example, here, the operation command file Aaa.cmd 211 and the operation command file Bbb.cmd 212 are executed in that order. FIG. 10 is an illustration depicting changes of gain of the sensor unit 70 when the CPU 40 executes the operation command files Aaa.cmd211 and Bbb.cmd212 in that order. The dotted line indicates gain under normal circumstances. By means of executing the operation command files Aaa.cmd, Bbb.cmd, gain is changed on a trial basis, and then returns to normal. In this way, the operation command files Aaa.cmd 211 and Bbb.cmd 212 instruct that the bill recognition unit 100 of the ATM 1000 be operated on a trial basis, and the data derived by execution of the operation command files Aaa.cmd 211 and Bbb.cmd 212 is utilized for maintenance of the bill recognition unit 100.

The content of the operation command files 210 is not limited to that depicted in FIGs. 9A and 9B, and various settings are possible by means of combining the operation commands of FIG. 7. Also, the number of operation command files 210 is not limited to two, and may be set to any number equal to one or greater. It is also possible to encode the operation command files 210.

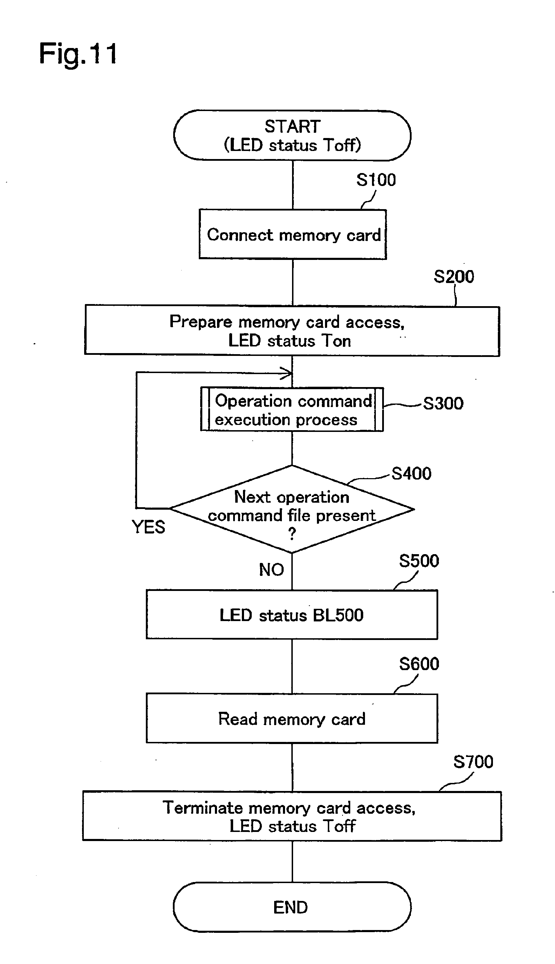

FIG. 11 is a flowchart depicting a maintenance operation execution sequence. Prior to initiating the maintenance operation, the LED status is Toff. The maintenance operator brings the memory card 200 with the operation command files 210 established therein to the location of the ATM 1000, and inserts the memory card 200 into a slot (not shown) in the bill recognition unit 100. By so doing the memory card 200 is connected to the memory card connector 60. Once the memory card 200 has been connected to the memory card connector 60 (Step S100), the CPU 40 sets the LED status to Ton, in order to indicate that preparation for memory access is in progress and the memory card 200 cannot be removed (Step S200). Next, the CPU 40 carries out the operation command execution process (Step S300).

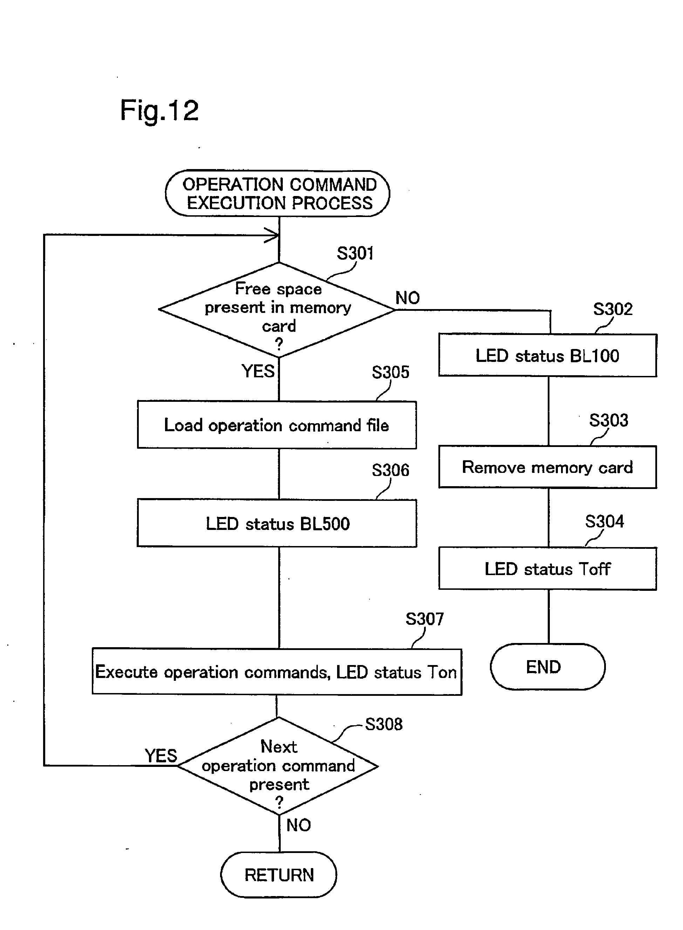

FIG. 12 is a flowchart depicting the operation command execution process. In the event that there is no free area in the data file memory section 230 of the memory card 200 (Step S301: NO), the CPU 40 sets the LED status to BL100 (Step S302). In this case, the maintenance operator removes the memory card 200 from the bill recognition unit 100 (Step S303). Once the memory card 200 has been removed, the CPU 40 sets the LED status to Toff (Step S304). In the event that an operation command described in an operation command file 210 is the change program execution command Change.prog, the process of Step S301 may be omitted.

In the event that there is a free area in the data file memory section 230 of the memory card 200 (Step S301: YES), the CPU 40 reads the operation command file Aaa.cmd 211 (Step S305) and sets the LED status to BL500 (Step S306). The CPU 40 then sets the LED status to Ton and executes the operation commands (Step S307).

In some instances, the CPU 40 may await a trigger in mid-process during execution of operation commands. During the time that the CPU 40 awaits a trigger it sets the LED status to BL500. For example, where the operation command is the command for execution in operating fault mode Survey .jud_sd or the command for execution in non-recyclable bill detected mode Trace.dat, the operation command will be executed once an operating fault or non-recyclable bill has been detected as a trigger. Where the operation command is the bill characteristic data save command Save.dat, it will wait until bill characteristic data Dt is recorded to the SDRAM 50, except in the case where bill characteristic data Dt has been previously saved to the SDRAM 50. That is, recording of bill characteristic data Dt to the SDRAM 50 is the trigger. The process for the identifying data save command Save.jud and the sensor data save command Monitor.sd is analogous to that for the bill characteristic data save command Save.dat.

In the case that the object of the maintenance is to acquire bill characteristic data Dt of a sample bill or reference bill, the maintenance operator, after connecting the memory card 200, performs a deposit transaction to the ATM 1000 by inserting the sample bill into the bill insertion opening of the ATM 1000 and making the sensor unit 70 scan the characteristics of the sample bill. By so doing, bill characteristic data Dt for the sample bill is saved to the SDRAM 50. The CPU 40, in accordance with the bill characteristic data save command Save.dat, takes the bill characteristic data Dt that was saved to the SDRAM 50 and saves it in a data file in the data file memory section 230.

In the event that there is no longer any free area in the data file memory section 230 in the course of execution of the operation command, the CPU 40 may set the LED status to BL100 despite the fact that execution of the operation command is ongoing, and terminate the process.

The CPU 40 executes saving of data files to the memory card 200 during times that the ATM 1000 is not performing transaction operations. However, in the event that the ATM 1000 attempts to initiate a transaction operation while a data file is being saved to the memory card 200, the start of the transaction operation will be suspended temporarily and wait until saving of the data file has been completed.

Once execution of the first operation command has been completed, the CPU 40 proceeds to execute the next operation command (Step S308), and in the event that a next operation command exists, the process of Step S301 - S307 is repeated. Once all the operation commands of the first operation command file Aaa.cmd 211 have been completed (Step S308: NO), a check is made to determine if a next operation command file 210 exists (Step S400 of FIG. 11). In the event that a next operation command file (e.g. the operation command file Bbb.cmd 212) does exist, the operation command execution process is again carried out (Step S300). In the event that a next operation command file does not exist, the LED status is set to BL100 (Step S500). In this case, the maintenance operator removes the memory card 200 from the bill recognition unit 100 (Step S600). Once the memory card 200 is removed, the CPU 40 sets the LED status to Toff (Step S700).

In the event that identifying data Jud and sensor data Sd (Suvjudfile and Suvsdfile) have been saved to the memory card 200 by means of the operation command execution process, the maintenance operator can determine sensor status on the basis of the identifying data Jud and sensor data Sd, with the maintenance computer 300. Sensor status will be discussed in detail later.

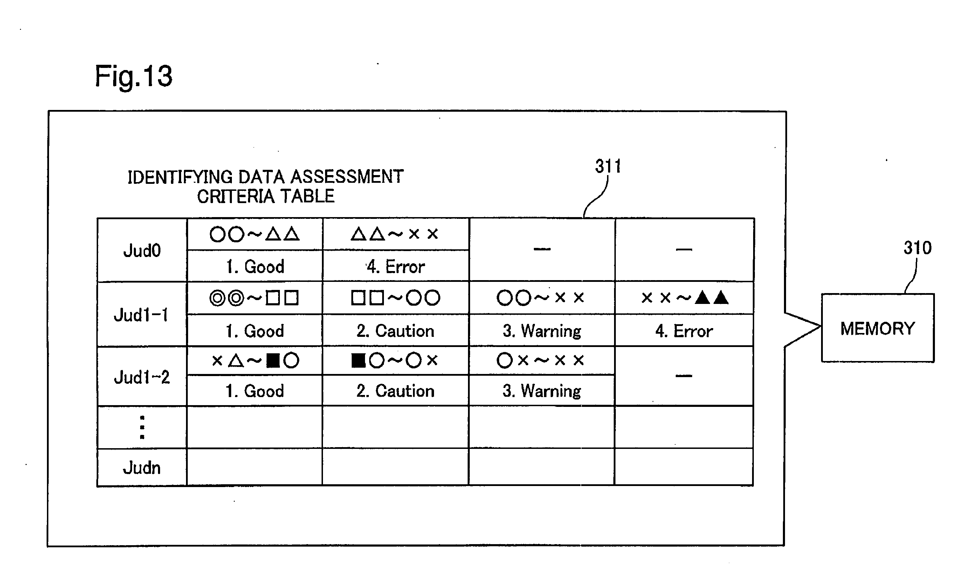

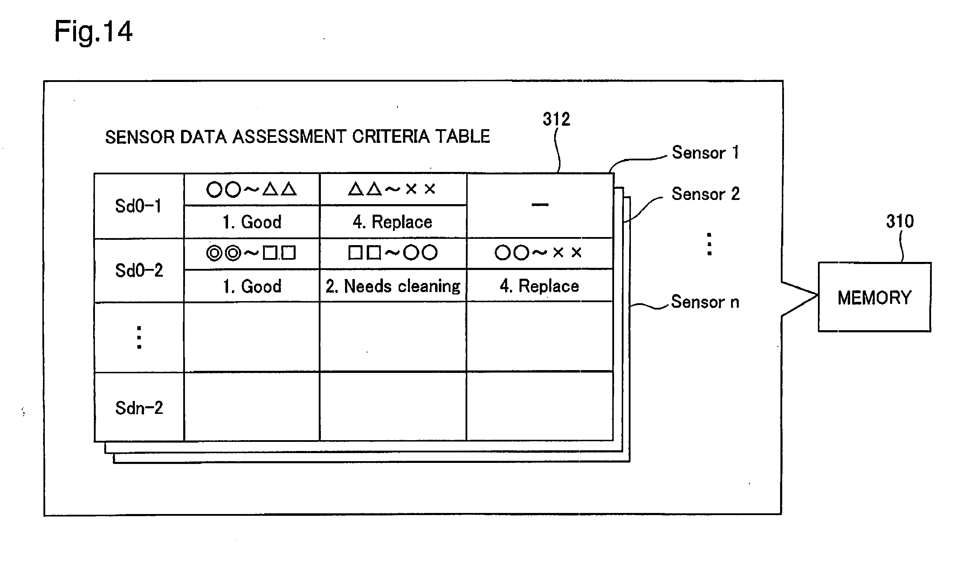

The maintenance computer 300 comprises a memory unit 310 and a sensor status assessment module 320. The memory unit 310 stores the identifying data assessment criteria table 311 of FIG. 13 and the sensor data assessment criteria table 312 of FIG. 14. The sensor status assessment module 320 compares the identifying data Jud with the identifying data assessment criteria table 311, and compares the sensor data Sd with the sensor data assessment criteria table 312, to assess the sensor status. The sensor status assessment module 320 corresponds to the sensor status display module of the present invention.

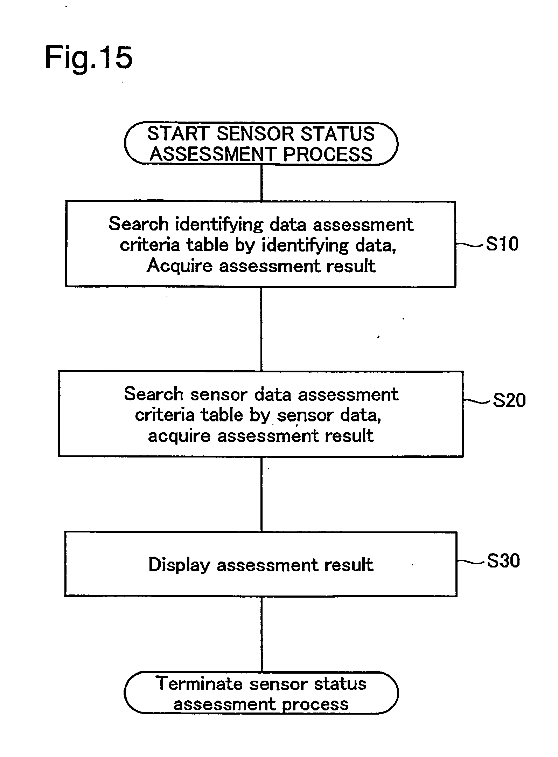

FIG. 15 is a flowchart depicting the sensor status decision process of the sensor status assessment module 320. First, the sensor status assessment module 320 searches the identifying data assessment criteria table 311 with reference to the identifying data Jud, and acquires the assessment result (Step S10). Specifically, several items of data like those shown in FIG. 5 are present in the identifying data Jud. The sensor status assessment module 320 assesses sensor status for each individual item of data. For example, if the data value of Jud0 lies in a prescribed first range of OO~ΔΔ, an assessment of "1. good" is made, whereas if the second item of data of Jud1 (denotes as Jud1-2 in the identifying data assessment criteria table 311) lies in a prescribed second range of OX~XX, an assessment of "3. warning" is made. Since n+1 pieces of data Jud0 -Judn exists for each bill, sensor status is assessed individually for these n+1 pieces of data Jud0 -Judn relating to all bills. From among the plurality of sensor status observations derived through assessment of sensor status for each of multiple data items, the sensor status assessment module 320 acquires as the assessment result the sensor status having the largest numerical value prefixed to the sensor status. That is, where the plurality of sensor status actually include "1. good," "2. caution," and "3. warning," "3. warning" will be acquired as the assessment result. It is also acceptable to acquire all of the plurality of sensor status as assessment results. By making this kind of assessment, caution will be notified that the value of the identifying data for a genuine bill is approaching to a threshold value for assessing whether a bill is genuine or counterfeit, due to degraded sensor output. Using bills in circulation in the service area in the above procedure, those bills in circulation can be studied which generate the identifying data in approximation with the threshold value.

Next, the sensor status assessment module 320 searches the sensor data assessment criteria table 312 with reference to the sensor data Sd, and acquires the assessment result (Step S20). The specific assessment method is the same as in the case of identifying data Jud, and will not be described in detail. However, a sensor data assessment criteria table 312 is stored for each sensor 1 -n, and for the sensor data Sd0- Sdn relating to sensor 1, the sensor data assessment criteria table 312 relating to sensor 1 is used to assess the sensor status. Assessment results are acquired individually for sensors 1 -n.

The assessment results acquired in Steps S10 and S20 are displayed as sensor status on the monitor screen of the maintenance computer by the sensor status assessment module 320 (Step S30).

According to the paper handling system 10000 of the embodiment, by attaching the memory card 200 to the bill recognition unit 100, a maintenance operator is able to easily acquire data of various kinds from the bill recognition unit 100 of the ATM 1000. The memory card 200 is easy to carry about. Operation content can be established in advance in an operation command file 210 so that the operation will proceed once the memory card 200 has been inserted into the slot of the bill recognition unit 100, so maintenance operations can be carried out without the need for any special technical skills on the part of the maintenance operator. In particular, by means of executing the operation command files Aaa.cmd 211 and Bbb.cmd 212, the input/output characteristics of the sensor unit 70 can be changed, and data for maintenance purposes can be acquired consequently. By means of acquiring data by executing the command for execution in operating fault mode Survey jud_sd or the command for execution in non-recyclable bill detected mode Trace.dat, data can be saved to the memory card 200 instantaneously at the point in time that an abnormal condition arises or the point in time that a non-recyclable bill is discovered. Consequently, an investigation when the ATM 1000 has encountered an operational fault, an investigation of a non-recyclable bill, or an investigation of bills in circulation in a particular service area can be carried out efficiently. Additionally, by collecting identifying data for a large number of bills in circulation with an in-service machine, threshold values for making genuine/counterfeit assessments can be reviewed and revised. By designing the system to acquire bill characteristic data Dt in the event that bills are assessed as non-recyclable or counterfeit 50% or more of the time in the course of a single transaction, as could occur when a counterfeiter is testing whether a counterfeit bill will be accepted for example; by so doing, data for the counterfeit bill retrieved by the counterfeiter will remain in the machine.

Since sensor status is output by the maintenance computer 300, the user can ascertain the severity of impairment of a sensor. Since an LED 80 is provided and the LED status changes depending on the condition of access to the memory card 200, the user can ascertain whether it is possible for the memory card 200 to be removed from the bill recognition unit 100.

Additionally, according to the paper handling system 10000 of the embodiment, operations to acquire bill characteristic data Dt, identifying data Jud, and sensor data Sd can be carried out with the memory card 200 only, without having to perform data acquisition operations remotely over a network or having to transmit data to the host computer 2000, and thus security can be maintained. Security can be enhanced further by means of encoding the data files 231, 232 and the operation command files 210. The encoded data files 231, 232 may be made decodable only by a designated administrator. The encoded operation command files 210 may be made decodable only by the memory card controller 10 or the creator of operation command files 210.

Also, according to the paper handling system 10000 of the embodiment, data that cannot be stored in the ATM 1000 due to limited memory capacity can be saved to the memory card 200 as well. The memory card 200 of the embodiment can also be used in instances where there are limitations of communication time and so on, so that bill characteristic data Dt cannot be transmitted to the ATM 1000 which is the parent device of the bill recognition unit 100.

Other Embodiments:
(1) In the preceding embodiment, LED status at completion of an operation is the same as that when the memory area of the memory card 200 is full; however, distinct status could be use instead. For example, the LED status at completion of an operation could be indicated by making the LED blink at 200 ms intervals.

(2) In the preceding embodiment, the sensor status assessment module 320 assesses sensor status on the basis of identifying data Jud and sensor data Sd, but an operation command to acquire bill characteristic data Dt may be provided as well, and sensor status may be output on the basis of the bill characteristic data Dt.

(3) While the preceding embodiment describes the sensor unit 70 as periodically outputting sensor data Sd, this arrangement is not limiting, it being possible instead for the CPU 40 to instruct the sensor unit 70 to output sensor data Sd in the event that a sensor data save command Monitor.sd has been issued, and for the sensor unit 70 to output sensor data Sd in response. In this case, the interval for outputting the sensor data Sd is specifiable by an argument of the sensor data save command Monitor.sd. In this case, once sensor data Sd equivalent to the number specified by the argument has been output, the CPU 40 issues to the sensor unit 70 an instruction to halt output of sensor data Sd. Also, while the preceding embodiment describes the input/output characteristics (gain) of the sensor unit 70, i.e. the sensor characteristics, being changed in the event that an operation command is the change program execution command Change.prog, the changed parameter is not limited to sensor characteristics, it being possible to change some other operating characteristic of the ATM 1000 or the bill recognition unit 100.

(4) While in the preceding embodiment assessment of sensor status is performed by the maintenance computer 300, the assessment may instead be carried out by the ATM 1000 or the bill recognition unit 100. Where carried out by the bill recognition unit 100, in the event that identifying data is close to the threshold value, i.e. "caution" or "warning," the bill characteristic data Dt for the bill can be acquired to the memory card 200. It is also possible to raise an alarm with the parent controller 110 or the ATM 1000 before sensor deterioration results in failure mode.

(5) While the preceding embodiment describes the paper handling apparatus as being an ATM 1000, the paper handling apparatus is not limited thereto, and could instead be a vending machine, cash dispenser, or ticket machine.

(6) While the preceding embodiment describes the portable memory medium as being a memory card 200, the medium is not limited to a memory card 200. The portable memory medium may employ some other memory medium such as a hard disk or DVD-RAM.

While the paper handling system, paper handling apparatus, paper handling method, and program for realizing the functions of a paper handling apparatus pertaining to the invention have been shown hereinabove based on certain preferred embodiments, these are intended merely to facilitate understanding of the invention and should not be construed as limiting of the invention. Various modifications and improvements to the present invention are possible without departing from the spirit and scope thereof as recited in the claims, and these will be considered to be included among the equivalents of the invention.

## Claims

1. A paper handling system comprising a paper handling apparatus that handles paper instruments, wherein
the paper handling apparatus comprises a control unit configured to control a portable memory medium which is to be detachably attached to the paper handling apparatus, the portable memory medium storing one or more operation commands; and
the control unit comprises:
a detection unit configured to detect whether the portable memory medium is currently in an attached state to the paper handling apparatus;
an operation command execution module configured to execute, if the detection unit detects the attached state, the one or more operation commands and to output execution result data obtained by executing the one or more operation commands; and
a recording unit configured to store the execution result data onto the portable memory medium.

2. The paper handling system according to Claim 1, wherein the execution result data is utilized for purpose of maintenance of the paper handling apparatus or for purpose of examining paper instruments in circulation in a service region of the paper handling apparatus.

3. The paper handling system according to Claim 1, wherein at least one operation command of the one or more operation commands is one that instructs modification on a trial basis of operating characteristics of the paper handling apparatus; and
the execution result data is utilized for validation regarding modification of the operating characteristics.

4. The paper handling system according to Claim 1, wherein
the paper handling apparatus further comprises a sensor for recognizing a characteristic of a the paper instrument,
the execution result data represents output of the sensor, and
the paper handling system further comprises:
a memory unit configured to store sensor status indicating severity of impairment of the sensor, in a form associated with the execution result data; and
a sensor status display module configured to acquire from the memory unit the sensor status that has been stored in association with the execution result data in the portable memory medium, and displays the sensor status.

5. The paper handling system according to Claim 1, wherein
the paper handling apparatus further comprises:
a sensor for recognizing a characteristic of a the paper instrument and outputting characteristic data based on the characteristic; and
an identifying data generation module configured to generate, from the characteristic data, identifying data for identifying at least one aspect selected from the type, authenticity, and possibility of recycling a paper instrument,
wherein the sensor is capable of output of sensor data representing output of the sensor in a prescribed standard status, and
the execution result data includes at least one set of data selected from the characteristic data, the identifying data, and the sensor data.

6. A paper handling method in a paper handling apparatus that handles paper instruments, the method comprising the steps of:
detecting whether or not a portable memory medium storing one or more operation commands is in an attached state to the paper handling apparatus;
if the attached state is detected, executing the one or more operation commands, and outputting execution result data obtained by executing the one or more operation commands; and
recording the execution result data onto the portable memory medium.
